# EUROPÄISCHE PATENTANMELDUNG

(11) **EP 4 087 032 A1**
(43) Veröffentlichungstag der Anmeldung: **09.11.2022**
(21) Anmeldenummer: 22171772.1
(22) Anmeldetag: 05.05.2022
(51) Int. Cl.: H01M 50/143, H01M 50/24, H01M 50/231, B65D 33/28

(54) **SCHUTZTASCHE FÜR EINEN AKKU**

(30) Priorität: 05.05.2021 DE 102021111704
(71) Anmelder: JUTEC Hitzeschutz und Isoliertechnik GmbH, 26180 Rastede (DE)
(72) Erfinder: Jung, Stefan, 26125 Oldenburg (DE)
(74) Vertreter: Jabbusch, Matthias

(57) **Zusammenfassung**

Die Erfindung betrifft eine Schutztasche für einen Akku, insbesondere zur sichereren Lagerung des Akkus und zum Schutz vor Flammenaustritt bei einer Havarie des in der Schutztasche positionierten Akkus. Die Schutztasche weist eine flexible, hitzebeständige und feuerfeste Wandung auf. Die Wandung besteht aus mehreren miteinander verbundenen Wandabschnitten und stellt einen Innenraum zur Aufnahme wenigstens eines Akkus bereit. Die Schutztasche weist eine Öffnung auf, durch die hindurch der Akku in den Innenraum eingelegt werden kann, und weist einen Verschluss zum Verschließen der Öffnung auf. Erfindungswesentlich ist vorgesehen, dass die Wandabschnitte wenigstens einen luftdurchlässigen Wandabschnitt aufweisen und dass, insbesondere zum Laden des in der Schutztasche befindlichen Akkus, dessen Ladekabel durch die Öffnung geführt ist, der Verschluss ein rings um die Öffnung herum geführtes hitzebeständiges Zugmittel zum Zusammenziehen der Öffnung aufweist.

## Beschreibung

Die Erfindung betrifft eine Schutztasche für einen Akku nach dem Oberbegriff des Patentanspruchs 1. Die Schutztasche ist insbesondere zur sicheren Lagerung des Akkus und zum Schutz vor Flammen bei einem Brand des in der Schutztasche aufgenommen Akkus konstruiert.

Eine gattungsgemäße Schutztasche weist eine flexible, hitzebeständige und feuerfeste Wandung auf. Die Wandung besteht aus mehreren miteinander verbundenen Wandabschnitten und stellt einen Innenraum zur Aufnahme wenigstens eines Akkus bereit. Weiter weist die Wandung eine Öffnung auf, durch die hindurch der Akku in den Innenraum eingelegt werden kann. Die Schutztasche weist außerdem einen Verschluss zum zumindest teilweisen Verschließen der Öffnung auf. Eine derartige gattungsgemäße Schutztasche ist beispielsweise aus DE 20 2019 103 451 U1 bekannt. Die aus DE 20 2019 103 451 U1 bekannte Schutztasche ist nicht dafür vorgesehen oder geeignet, den Akku zu laden, während der Akku in der Schutztasche gelagert ist. Diese bekannte Schutztasche ist daher keine Ladeschutztasche.

Der Erfindung liegt die Aufgabe zugrunde, eine Schutztasche der vorstehend beschriebenen Art bereitzustellen, deren Handhabung verbessert ist. Insbesondere soll eine Schutztasche bereitgestellt werden, in der Lithium-Ionen Akkus sicher vollständig geladen werden können oder in der ein kritisch defekter Akku geschützt untergebracht werden kann.

Die Erfindung löst diese Aufgabe mit einer Schutztasche nach dem Patentanspruch 1. Vorteilhafte Ausführungsformen der Erfindung sind in den Unteransprüchen angegeben.

Bei einer Schutztasche für einen Akku, insbesondere zur sichereren Lagerung des Akkus und zum Schutz vor Flammenaustritt bei einer Havarie des in der Schutztasche positionierten Akkus, mit einer flexiblen, hitzebeständigen und feuerfesten Wandung, die aus mehreren miteinander verbundenen Wandabschnitten besteht und einen Innenraum zur Aufnahme wenigstens eines Akkus bereitstellt, und mit einer Öffnung, durch die hindurch der Akku in den Innenraum eingelegt werden kann, und mit einem Verschluss zum Verschließen der Öffnung, ist erfindungswesentlich vorgesehen, dass die Wandabschnitte wenigstens einen luftdurchlässigen Wandabschnitt aufweisen und dass, insbesondere zum Laden des in der Schutztasche befindlichen Akkus, dessen Ladekabel durch die Öffnung geführt ist, der Verschluss ein rings um die Öffnung herum geführtes hitzebeständiges Zugmittel zum Zusammenziehen der Öffnung aufweist.

Unter einem Akku ist vorliegend insbesondere ein Akkupack, also ein Energiespeicher mit mehreren wiederaufladbaren Speicherelementen, insbesondere Sekundärzellen, zu verstehen. Der Akku ist insbesondere ein Lithium-Ionen-Akku. Der Akku ist beispielsweise für ein E-Bike oder für einen E-Roller oder für einen Golftrolly oder für einen Rasenmäher oder für ein anderes elektrisch betriebenes Werkzeug oder Gerät vorgesehen. "Ein", "eines" oder "einen" in Verbindung mit "Akku" ist als unbestimmter Artikel und nicht als Zahlwort zu verstehen. Die Schutztasche kann also auch zur Aufnahme weiterer Akkus geeignet sein.

Ein Brand oder in anderen Worten eine Havarie des Akkus kann prinzipiell auftreten bei mechanischer Beschädigung des Akkus, beispielsweise durch Herunterfallen des Akkus, bei thermischer Belastung, beispielsweise aufgrund von Sonneneinstrahlung oder Lagerung an einem warmen Ort, bei einem kritischen Defekt des Akkus, bei Überlastung oder auch bei Unterladen durch Tiefentladung.

Die Schutztasche ist zur sicheren Lagerung eines Akkus geeignet, auch während eines Ladevorgangs des Akkus. Damit ist die Schutztasche insbesondere eine Lade-Schutztasche, die den Akku bei einem aktiven Ladevorgang schützt. Die Schutztasche dient gleichsam als Transportschutz, insbesondere mechanischer Stoßschutz, für den Akku. Dank des wenigstens einen luftdurchlässigen Wandabschnitts können Gase großflächig entweichen, so dass der beim Brand im Innenraum entstehende Überdruck abgebaut wird. Der luftdurchlässige Wandabschnitt ermöglicht also einen Druckausgleich zwischen dem Innenraum und der Umgebung und verhindert zugleich einen Flammenaustritt durch diesen luftdurchlässigen Wandabschnitt. Dank der Ausbildung des Verschlusses mit dem um die Öffnung herum geführten Zugmittel ist die Schutztasche bei geschlossener Öffnung nicht vollständig verschlossen, so dass ein Teil der Gase durch die Öffnung entweichen kann. Diese durch die Öffnung entweichenden Gase enthalten Rauch. Einem in der Nähe befindlichen Rauchmelder wird daher ausreichend Rauchgas zugeführt, um einen Alarm auszulösen. Ein brennender Akku kann somit schnell entdeckt und die Feuerwehr gerufen oder die Schutztasche an einen anderen Platz zum kontrollierten Abbrennen des Akkus verbracht werden. Durch die verschlossene Öffnung kann außerdem problemlos ein Ladekabel von innen am Akku nach außen zu einer Steckdose geführt werden.

Die Schutztasche ist besonders bevorzugt feuerfest und hitzebeständig. Insbesondere hält die Wandung der Schutztasche einer Hitze bis 900 °C, besonders bevorzugt bis 1000 °C, stand. Das Zugmittel ist bevorzugt bis mindestens ca. 200 °C, weiter bevorzugt bis mindestens ca. 300 °C oder 400 °C, insbesondere bis etwa 500 °C, hitzebeständig. Die Wandung der Schutztasche ist insbesondere abriebfest, schnittfest und weiterreißfest. Die Schutztasche ist nach alledem für die Lagerung von Akkus in Kellern, Garagen, Geräteschuppen, Carports, belüfteten Räumen, die nicht einem Wohnzweck dienen, oder Kofferräumen von Fahrzeugen, wie beispielsweise Wohnmobilen, geeignet und schützt zudem vor Erschütterung und mechanischer Beschädigung des Akkus auch bei von außen einwirkenden Stößen.

Der Spalt im Bereich der Öffnung ist nach dem Verschließen der Öffnung und somit bei der verschlossenen Öffnung immer vorhanden. Der Spalt ist dabei entweder frei oder bevorzugt anderweitig, insbesondere luftdurchlässig, verschlossen. Unter der verschlossenen Öffnung ist daher vorliegend keine, insbesondere mittels der Wandung, luftdicht verschlossene Öffnung zu verstehen. Insbesondere kann daher bei Nutzung der Schutztasche zur Lagerung des Akkus auch ein Ladekabel zum Laden des Akkus durch die verschlossene Öffnung, also durch den verbleibenden Spalt, durch den im Brandfall auch Rauchgase entweichen können, aus dem Innenraum herausgeführt sein. Der Ladevorgang kann daher beispielsweise über Nacht in Innenräumen, Garagen oder Carports durchgeführt werden, wobei die Schutztasche im Fall einer Überladung oder Fehlfunktion, die zur Überhitzung und zum Brand des Akkus führt, einer Ausbreitung des Brandes in die Umgebung der Schutztasche entgegenwirkt.

Bei besonders bevorzugten Ausführungsformen der Schutztasche weist die Wandung eine luftdurchlässige Lage aus Metall auf. Diese Lage aus Metall ist vorzugsweise als Metallgittergewebe ausgebildet. Alternativ kann die Lage aus Metall auch ein Lochblech, beispielsweise in Form eines dünnen Rohres mit Löchern, sein. Die Lage aus Metall verhindert zuverlässig, dass Teile des Akkus, die größer als die Öffnungen in dieser Lage aus Metall sind, durch die Wandung durchstechen oder durchschießen können.

An der Innenseite der Wandung, jedoch bevorzugt bedeckt vom Schutzgewebe, ist vorteilhafterweise ein luftdurchlässiger Isolierstoff zur thermischen Isolierung vorgesehen. Bei einer ersten Variante hiervon weist die Schutztasche zusätzlich zur Wandung eine Innentasche auf, welche aus dem luftdurchlässigen Isolierstoff besteht. Die Innentasche ist vorzugsweise zumindest stellenweise an der Wandung festgelegt. Bei einer zweiten Variante ist innenseitig vor jedem Wandabschnitt ein entsprechender Abschnitt aus dem luftdurchlässigen Isolierstoff angeordnet. Bei einer dritten Variante ist der durchlässige Isolierstoff Teil der Wandung, also insbesondere eine innenseitige Lage auf dem Textilgewebe. Der Isolierstoff ist vorzugsweise ein Vlies.

Insbesondere ist vorgesehen, dass innenseitig der Lage aus Metall ein Isolierstoff, insbesondere ein hitzebeständiges Vlies, vorzugsweise Karbonvlies, angeordnet ist. Vorzugsweise ist weiter außenseitig der Lage aus Metall ein Isolierstoff, insbesondere ein hitzebeständiges Vlies, vorzugsweise Karbonvlies, angeordnet und ist außenseitig der Lage aus Metall wenigstens ein weiterer Isolierstoff, insbesondere ein weiteres hitzebeständiges Vlies, vorzugsweise Glasvlies, und weiter außenliegend noch ein hitzebeständiges Vlies, vorzugsweise vernadelter Kohlenstoff mit Glasgewebe, angeordnet. Das jeweilige Karbonvlies ist insbesondere eine Polyacrylnitrilfaser.

Aufgrund einer Isolierwirkung der einzelnen Wandungen, insbesondere mit Hilfe des Isolierstoffes, kann ein Temperaturanstieg des Innenraums bei einer Havarie des Akkus auf Temperaturen von mehr als 500 °C, bevorzugt auf mehr als 400 °C, besonders bevorzugt auf mehr als 200 °C, vermieden werden.

Gemäß einer vorteilhaften Ausführungsform der Schutztasche weist die Wandung an ihrer Außenseite ein abriebfestes und schnittfestes Hochtemperaturgewebe, insbesondere Para-Aramidgewebe oder Preox-Aramidgewebe, auf. Das Preox-Aramidgewebe ist dabei insbesondere ein Hitzeschutzgewebe aus Para-Aramidfaser und preoxidierter Acrylnitrilfaser.

Bei einer besonders bevorzugten Ausführungsform der Schutztasche ist vorgesehen, dass die Schutztasche einen im Bereich der Öffnung mit der Wandung fest oder mittels eines Verbindungsmittels, insbesondere Druckknopfes, reversibel verbundenen gasdurchlässigen Stopfen aufweist, dessen Durchmesser in wenigstens einem bei eingelegtem Akku im Innenraum zwischen dem Verschluss und dem Akku angeordneten Abschnitt größer als der Öffnungsdurchmesser der zusammengezogenen Öffnung. Der Stopfen kann also in der verschlossenen Öffnung platziert werden und den Restspalt derart verschließen, dass weiter Gase durch die verschlossene Öffnung entweichen können, dass aber Funken bei Funkenflug und feste Teile, die möglicherweise vom Akku abgesprengt werden, zurückgehalten werden. Das Verbindungsmittel ist insbesondere ein Druckknopf. Das Verbindungsmittel ist vorzugsweise mittels einer Lasche des Stopfens an einem Verschlusskörper des Stopfens befestigt.

Dabei ist der Stopfen, insbesondere der Verschlusskörper des Stopfens, vorzugsweise in etwa kegelstumpfartig ausgebildet. Insbesondere ist in axialer Richtung ein erster Abschnitt des Stopfens mit vergleichsweise größerem Durchmesser dem Akku zugewandt und ist ein zweiter Abschnitt des Stopfens mit vergleichsweise kleinerem Durchmesser der Öffnung zugewandt. Bei einer Havarie des Akkus drückt somit allenfalls der Abschnitt mit dem kleineren Durchmesser durch die Öffnung aus dem Innenraum heraus. Der am Akku anliegende Abschnitt mit dem größeren Durchmesser wird rings um die Öffnung gegen die Wandung gepresst und sorgt somit für einen sicheren Verschluss des verbleibenden Spaltes in der mittels des Verschlussbandes verschlossenen Öffnung.

Bevorzugt ist ein Aufbau des Stopfens, insbesondere des Verschlusskörpers des Stopfens, vorgesehen, bei dem der Stopfen einen Kern aus Metalldraht, insbesondere Metalldrahtgeflecht oder Stahlwolle, aufweist. Insbesondere sind zwei unterschiedlich große Knäuel des Metalldrahtes im Stopfen vorgesehen. Das Metall verhindert wirksam den Durchtritt größerer Partikel. Bevorzugt weist der Stopfen außerdem eine Hülle aus Glasgittergewebe auf. Zwischen dem Kern und der Hülle, insbesondere an den axialen Enden des Stopfens, ist vorzugsweise zumindest abschnittsweise, insbesondere tellerartig, Glasvlies angeordnet.

Besonders bevorzugt ist vorgesehen, dass das Zugmittel außenseitig um die Wandung herum geführt ist. Das Zugmittel kann die Wandung daher zum Verschließen der Öffnung einschnüren. Dabei ist das Zugmittel vorzugsweise an der Wandung festgelegt. Das Zugmittel ist bei einer bevorzugten Variante hierbei direkt an der Wandung festgelegt, beispielsweise fest mit der Wandung vernäht. Bei einer anderen Variante ist das Zugmittel mittelbar an der Wandung festgelegt, beispielsweise durch wenigstens eine Lasche oder Schnalle hindurchgeführt, die an der Wandung befestigt ist.

Gemäß einer vorteilhaften Ausführungsform der Schutztasche weist der Verschluss eine feuerfeste Schnalle mit wenigstens einem Durchlass auf. Vorzugsweise ist hierbei weiter vorgesehen, dass sich das Zugmittel von einem an der Schnalle festgelegten Ende des Zugmittels um die Wandung herum und durch den Durchlass hindurch bis zu einem freiliegenden Ende des Zugmittels erstreckt.

Dabei ist der Verschluss insbesondere ein Schnellverschluss. Die Öffnung ist hierbei allein durch Zug am freien Ende des Zugmittels zusammenziehbar. Die Schnalle sichert das Zugmittel gegen ein selbsttätiges Zurückziehen des Zugmittels durch den Durchlass. Die Schutztasche, insbesondere die Wandung, kann daher nach dem Einlegen des Akkus schnell und einfach verschlossen werden. Dies sorgt im täglichen Gebrauch für eine komfortable Handhabung und ermöglicht auch das schnelle Verschließen, wenn ein bereits brennender Akku in die Schutztasche eingelegt wurde.

Bei einer weiteren vorteilhaften Ausführungsform weist der Verschluss einen Überzug aus einem Hitzeschutzgewebe auf. Dadurch kann einer starken Ausdehnung von Teilen des Verschlusses durch Hitze entgegengewirkt werden. Außerdem kann der Verschluss, insbesondere in Verbindung mit der Ausführungsform mit dem Überzug, selbst weniger hitzebeständig ausgebildet sein.

Die Schnalle ist bevorzugt eine Formschlussschnalle. Alternativ oder zusätzlich ist die Schnalle bevorzugt eine Klemmschnalle. Es wird also eine Verbindung zwischen dem Zugmittel und der Schnalle über eine Klemmverbindung oder Formschlussverbindung oder eine Kombination beider Verbindungsarten hergestellt. Ein Formschluss erfolgt dabei vorzugsweise durch Eingreifen von an der Schnalle ausgebildeter Zacken in das Zugmittel. Das Zugmittel ist bevorzugt ein Riemen. Alternativ ist das Zugmittel ein Seil oder eine Kordel. Bei einer weiteren Ausführungsform ist der Verschluss ein temperaturbeständiger Klettverschluss. Bei einer anderen Ausführungsform ist die Kombination aus Verschluss und Zugmittel aus einem Ledergürtel mit Gürtelschnalle gebildet.

Bei einer besonders bevorzugten Ausführungsform der Erfindung umfassen die Wandabschnitte wenigstens einen luftdichten Wandabschnitt und den wenigstens einen luftdurchlässigen Wandabschnitt. Dank des wenigstens einen luftdichten Wandabschnitts kann die Tasche mit diesem luftdichten Wandabschnitt auf einem Untergrund aufliegen, ohne den Untergrund bei einem eventuellen Brand des Akkus zu beschädigen.

Besonders bevorzugt ist hierbei vorgesehen, dass zwei luftdichte Wandabschnitte eine Oberseite und eine Unterseite der Wandung ausbilden. Insbesondere weist die Wandung in Längsrichtung genau diese zwei luftdichten Wandabschnitte auf. Die Schutztasche kann somit flexibel wahlweise mit der luftdichten Oberseite oder mit der luftdichten Unterseite auf eine Unterlage aufgelegt werden.

Jeder luftdichte Wandabschnitt weist vorzugsweise, insbesondere außenseitig, eine luftdichte Beschichtung, insbesondere Kaschierung, auf. Die luftdichte Beschichtung besteht insbesondere aus Aluminium oder einem anderen Metall. Jeder luftdurchlässige Wandabschnitt weist vorzugsweise ein Schnittschutzgewebe auf. Insbesondere besteht jeder luftdurchlässige Wandabschnitt aus dem Schnittschutzgewebe. Dadurch wird ein Schutz vor Beschädigungen und eine lange Haltbarkeit der Schutztasche ermöglicht. Die luftdichten Wandabschnitte bestehen bevorzugt aus einem aluminisierten Hitzeschutzgewebe.

Bevorzugt ist weiter vorgesehen, dass zwei luftdurchlässige Wandabschnitte jeweils eine zwischen der Oberseite und der Unterseite angeordnete Längsseite der Wandung ausbilden. Insbesondere weist die Wandung in Längsrichtung genau diese zwei luftdurchlässigen Wandabschnitte auf. Luft aus dem Innenraum wird somit bei einem Akkubrand gezielt zu den einander gegenüberliegenden Seiten abgeleitet. Die Schutztasche bleibt daher auch durch etwaige Rückstoßeffekte unbeeinflusst an ihrem Ablageort liegen.

Am Fuß der Schutztasche, welcher der am Kopf der Schutztaschen angeordneten Öffnung gegenüberliegt, ist vorzugsweise ein weiterer, insbesondere dritter, luftdichter Wandabschnitt oder luftdurchlässiger Wandabschnitt angeordnet. Besonders bevorzugt ist der weitere Wandschnitt am Fuß der Schutztasche ein dritter luftdichter Wandabschnitt, der weiter bevorzugt einteilig mit den die Oberseite und die Unterseite ausbildenden luftdichten Wandabschnitten ausgebildet ist. Damit kann die Schutztasche wahlweise liegend oder stehend, also senkrecht auf den luftdichten Fuß aufgestellt, mit Kontakt jeweils eines luftdichten Wandabschnitts zum Untergrund aufgestellt werden.

Gemäß einer vorteilhaften Ausführungsform der Schutztasche besteht jeder Wandabschnitt, insbesondere jeder luftdichte Wandabschnitt und/oder jeder luftdurchlässige Wandabschnitt, aus einem hitzebeständigen mehrlagigen Textilgewebeaufbau. Damit werden insbesondere eine hohe Abriebfestigkeit, vorzugsweise nach Level 3 von 4, eine hohe Schnittfestigkeit, vorzugsweise nach Level 5 von 5, eine hohe Weiterreißfestigkeit, vorzugsweise nach Level 4 von 4, eine hohe Durchstichfestigkeit, vorzugsweise nach Level 2 von 4, und eine hohe Weiterreißfestigkeit, insbesondere nach der Europäischen Norm EN 388, erreicht. Vorzugsweise wird somit ein mechanischer Stoßschutz erreicht. Im Falle einer Explosion des Akkus können daher beispielsweise auf die Wandung treffende Kunststoffteile oder Metallsplitter des Akkus nicht in die Umgebung der Schutztasche entweichen. Der Textilgewebeaufbau ist insbesondere ein Preox-Aramidgewebe oder weist ein Preox-Aramidgewebe auf.

Vorteilhafterweise weist die Schutztasche ein an der Innenseite der Wandung angeordnetes luftdurchlässiges Schutzgewebe zum Schutz der Wandung vor Abrieb durch den Akku auf. Das Schutzgewebe ist vorzugsweise ein Preox-Aram idgewebe.

Besonders bevorzugt sind die Wandabschnitte miteinander vernäht. Insbesondere sind die luftdurchlässigen Wandabschnitte mit den luftdichten Wandabschnitten vernäht. Die Wandabschnitte sind dabei insbesondere in ihren Randbereichen übereinandergelegt. Die Außenkanten der Wandabschnitte sind vorzugsweise geschützt hinter Schutzstreifen angeordnet. Die Schutzstreifen sind U-förmig um die Kanten gelegt und vorzugsweise mit den Randbereichen der Wandabschnitte vernäht. Weiter ist bevorzugt vorgesehen, dass die Außenkanten der Wandabschnitte nach außen weisen. Dadurch sind die Kanten und insbesondere die Schutzstreifen außerhalb des Innenraums angeordnet und brauchen folglich nicht den Flammen und den im Innenraum bei einem Brand des Akkus vorliegenden Temperaturen standhalten. Innenliegend ist vorzugsweise ein hitzebeständiger Keder als Nahtschutz in die jeweilige Naht eingelegt, der die Naht vor Flammen abschirmt. Der Keder ist insbesondere als mit seinen Enden in die Naht eingelegter und insbesondere mit tropfenförmigem Querschnitt aus der Naht hervorstehender Schutzstreifen ausgebildet.

Außenseitig an der Wandung, insbesondere im Bereich der Öffnung, ist vorzugsweise eine Transportschlaufe angebracht. Dank der Transportschlaufe kann die Schutztasche, auch wenn sich innenliegend ein brennender Akku befindet, gegriffen und in einen Bereich gebracht werden, in dem der Akku dann kontrolliert abbrennen soll.

Akkus werden vielfältig für die elektrische Energieversorgung auch im privaten Umfeld eingesetzt. Dank zunehmend höherer Kapazitäten werden auch zunehmend Elektromotoren elektrischer Arbeitsmaschinen von Akkus betrieben. Die Abmessungen der Akkus unterscheiden sich voneinander. Die erfindungsgemäße Schutztasche ist bevorzugt entsprechend den Abmessungen des für die Lagerung darin vorgesehenen Akkus ausgestaltet. Insbesondere ist das Volumen des Innenraums dabei vorzugsweise mindestens 5 % oder mindestens 10 % größer bemessen als das Volumen des darin zu lagernden Akkus. Dadurch werden die Auswirkungen der Druckwellen von bei einem Akkubrand explosionsartig freigesetzten Gasen auf die Wandung soweit vermindert, dass die Wandung diesen Druckwellen standhalten kann.

Bei einer speziellen und besonders bevorzugten Ausführungsform der erfindungsgemäßen Schutztasche sind die Abmessungen der Wandung für die Aufnahme eines E-Bike Akkus angepasst. Insbesondere ist dabei die Länge des Innenraums bis zur Öffnung mehr als dreimal so groß ist wie die Höhe und wie die Breite des Innenraums. Die Höhe des Innenraums ist dabei insbesondere zwischen der Oberseite und der Unterseite bemessen. Die Breite des Innenraums ist insbesondere zwischen den, insbesondere von den luftdurchlässigen Wandabschnitten ausgebildeten, Längsseiten bemessen.

Weitere Ausführungsformen ergeben sich aus den Ansprüchen, aus den Zeichnungen und aus der nachfolgenden Beschreibung eines in den Zeichnungen dargestellten besonders bevorzugten Ausführungsbeispiels der Erfindung. In den Zeichnungen zeigen:
- Fig. 1:: eine Schutztasche für einen Akku gemäß einem Ausführungsbeispiel der Erfindung und einen zur Aufnahme in der Schutztasche bestimmten Akku in einer ersten perspektivischen Ansicht;
- Fig. 2:: einen Ausschnitt der Schutztasche von Figur 1 mit dem darin aufgenommenen Akku bei einem Ladevorgang in einer zweiten perspektivischen Ansicht;
- Fig. 3:: die Schutztasche von den Figuren 1 und 2 in einer dritten perspektivischen Ansicht;
- Fig. 4:: einen Ausschnitt der Schutztasche von den Figuren 1 bis 3 in einer vierten perspektivischen Ansicht;
- Fig. 5:: die Schutztasche von den Figuren 1 bis 4 in einer fünften perspektivischen Ansicht;
- Fig. 6:: einen Ausschnitt der Schutztasche von den Figuren 1 bis 5 in einer sechsten perspektivischen Ansicht; und
- Fig. 7:: einen Stopfen einer erfindungsgemäßen Schutztasche gemäß einem Ausführungsbeispiel der Erfindung.

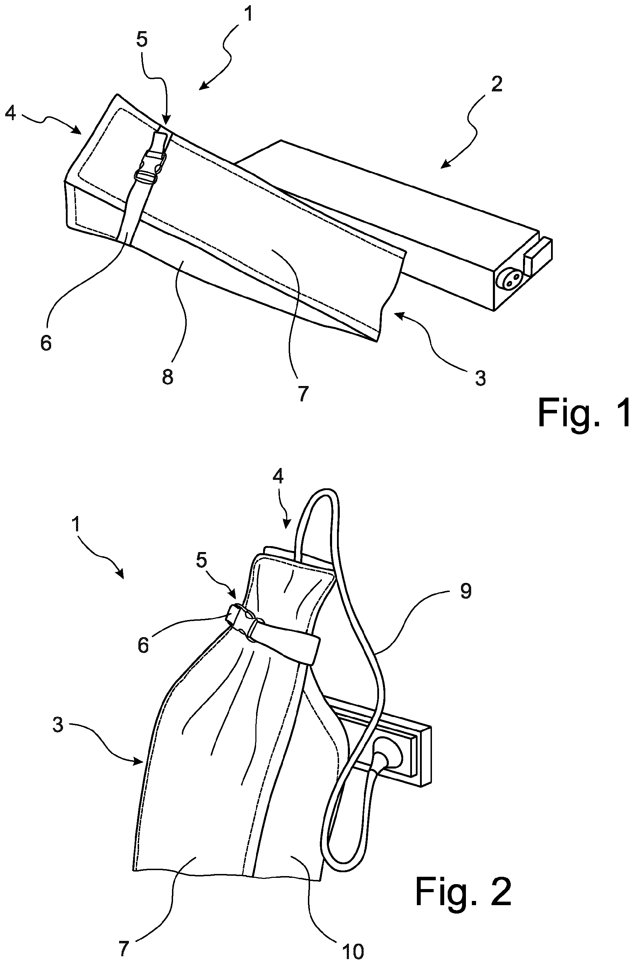

In Fig. 1 ist eine Schutztasche 1 und ein Akku 2 in Form eines E-Bike Akkus 2 dargestellt. Die Schutztasche 1 ist zur Aufnahme des Akkus 2 in einem Innenraum der Schutztasche 1 eingerichtet und hierfür speziell an die Abmessungen des jeweiligen Akkus 2, im gezeigten Ausführungsbeispiel also des E-Bike Akkus 2, angepasst, wobei der Innenraum der Schutztasche 1 etwas größer bemessen ist als der Akku 2. Für die Aufnahme wenigstens eines Akkus 2 mit anderen Abmessungen weist auch die Schutztasche 1 in Abweichung vom dargestellten Ausführungsbeispiel andere Abmessungen auf.

Der Akku 2 ist insbesondere ein Lithium-Ionen-Akku, der sich bei Beschädigung, Überhitzung, Überladung oder Tiefentladung selbst entzünden kann. Hierbei kommt es zu einem Zellenbrand, bei welchem große Hitze entsteht, Flammen auftreten, explosionsartig Gase freigesetzt werden und Rauch freigesetzt wird. Ein derartiger Zellenbrand ist schwer zu löschen. Ziel ist es daher, zumindest bis zum Eintreffen der Feuerwehr, den Akku 2 kontrolliert abbrennen zu lassen und dabei die Schäden in der Umgebung möglichst gering zu halten. Insbesondere soll verhindert werden, dass im Falle eines Brandes des Akkus 2 ein Schuppen oder Carport oder eine andere Räumlichkeit, in welcher der Akku 2 gelagert ist, in Brand gesetzt wird. Auch Schäden durch die Hitze des Akkus 2 sollen minimiert werden. Ferner ist es von Vorteil, die Freisetzung von Rauch begrenzt zu halten, zugleich aber weiterhin die Alarmierung durch Rauchmelder zu ermöglichen.

Die erfindungsgemäße Schutztasche 1 weist eine flexible, bis 900 °C hitzebeständige und feuerfeste Wandung 3 auf, in welche der Akku 2 durch eine Öffnung 4 in der Wandung 3 hineingelegt werden kann. Die Wandung 3 weist insbesondere eine luftdurchlässige Lage aus einem Metallgittergewebe auf. Die Lage aus Metallgittergewebe kann auch Teile zurückhalten, die mit hoher kinetischer Energie vom Akku 2 abgesprengt werden. Diese Teile können daher nicht durch die Wandung 3 durchstechen und nicht durch die Wandung 3 aus der Schutztasche 1 entweichen.

Die Öffnung 4 kann mittels eines Verschlusses 5 verschlossen werden. Hierfür weist der Verschluss 5 ein im Bereich der Öffnung 4 außenseitig um die Wandung 3 herum geführtes und bis 200 °C hitzebeständiges Zugmittel 6 in Form eines Riemens auf. Das Zugmittel 6 ist an einem ersten luftdichten Wandabschnitt 7 an der Oberseite der Wandung 3 befestigt. Der Boden und die Unterseite der Wandung 3 sind entsprechend mit luftdichten Wandabschnitten ausgebildet. Luftdichtheit wird dabei durch eine Beschichtung des Gewebes, aus dem die luftdichten Wandabschnitte 7 hergestellt sind, gewährleistet. Die Längsseiten der Wandung 3 sind von einem ersten luftdurchlässigen Wandabschnitt 8 und einem dem ersten luftdurchlässigen Wandabschnitt 8 gegenüberliegenden und daher in Fig. 1 nicht sichtbaren zweiten luftdurchlässigen Wandabschnitt ausgebildet. Die luftdurchlässigen Wandabschnitte 8 bestehen aus einem Schnittschutzgewebe, ermöglichen eine großflächige Freisetzung von Gasen und halten dabei Rauch und gegebenenfalls bei einer Explosion des Akkus 2 vom Akku 2 abgestoßene Teilchen im Innenraum der Wandung 3 zurück.

Fig. 2 zeigt die Schutztasche 1 mit dem im Innenraum der Schutztasche 1 angeordneten und daher nicht sichtbaren Akku 2. Gleiche Bezugszeichen bezeichnen in allen Figuren dieselben Teile.

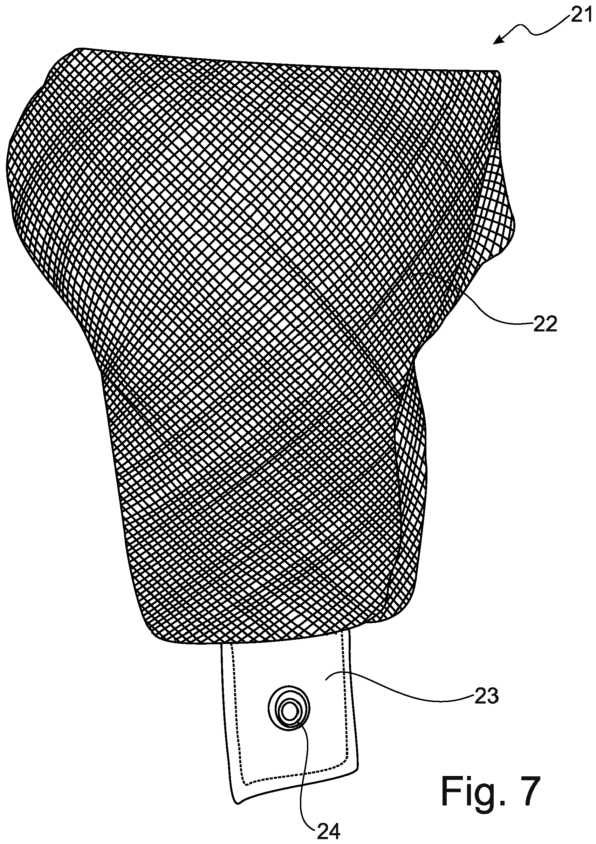

Die Wandung 3 ist mittels des Zugmittels 6 zusammengezogen. Die Öffnung 4 ist daher so weit geschlossen, dass nur noch ein Spalt verbleibt, durch den ein Ladekabel 9 durch die Öffnung 4 aus dem Innenraum der Schutztasche 1 herausgeführt ist und durch den in begrenztem Maße Gase einschließlich Rauch aus dem Innenraum der Schutztasche 1 entweichen können, wenn es zu einem Brand des Akkus 2 kommt. In Abweichung vom Ausführungsbeispiel von Figur 2 wird gemäß einem alternativen Ausführungsbeispiel ein Stopfen, insbesondere gemäß Figur 7, im Bereich der Öffnung platziert, so dass vom Akku 2 abgesprengte Teile ab einer definierten Größe, die ansonsten noch durch den verbleibenden Spalt entweichen könnten, sicher vom Stopfen zurückgehalten werden.

Der Akku 2 kann beispielsweise in belüfteten Räumen, die nicht dem Wohnzweck dienen, unter Einhaltung vorgegebener Sicherheitsmaßnahmen geladen werden. Wenn es beispielsweise durch eine Fehlfunktion zur Überladung des Akkus 2 und zu einem Zellenbrand kommt, hält die Schutztasche 1 den Brand auf den Innenraum der Schutztasche 1 beschränkt. Gase treten durch den in Fig. 2 verdeckt angeordneten ersten luftdurchlässigen Wandabschnitt 8 und den bereits in der Beschreibung zu Fig. 1 genannten und hier erstmals bezeichneten zweiten luftdurchlässigen Wandabschnitt 10 aus. Rauchgase können in begrenztem Maß durch die verschlossene Öffnung 4 austreten und damit gegebenenfalls einen in der Nähe befindlichen Rauchmelder auslösen. In Abweichung vom dargestellten Ausführungsbeispiel kann die Schutztasche 1 zusätzlich eine Transportschlaufe, vorzugsweise in der Nähe des Verschlusses 5, aufweisen. Mittels der Transportschlaufe kann die Schutztasche 1 ohne Berührung der möglicherweise bereits erhitzten Wandung 3 beispielsweise aus einem Raum heraus getragen werden, um den Akku 2 im Freien abbrennen zu lassen.

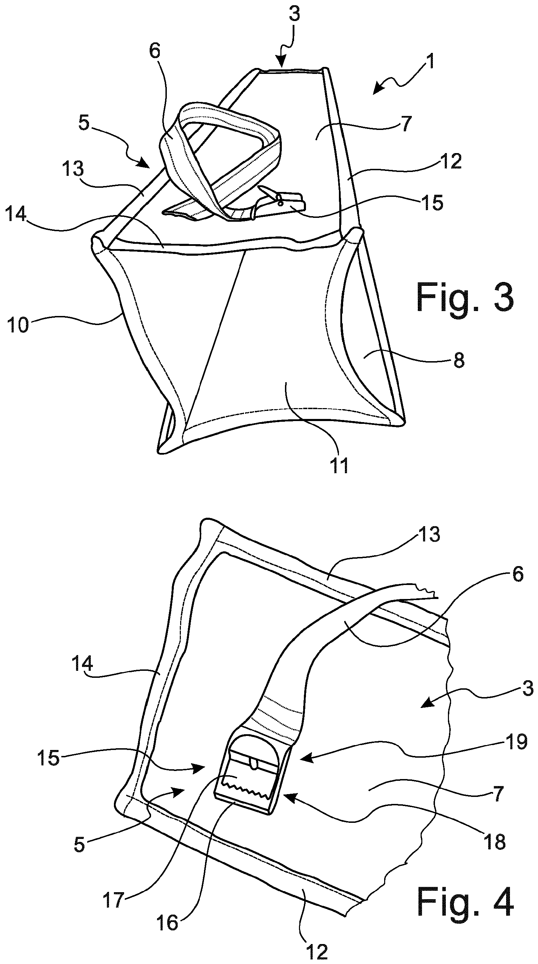

Fig. 3 zeigt die Schutztasche 1 mit Blick durch die geöffnete Öffnung 4 in den von der Wandung 3 bereitgestellten Innenraum. Der dem ersten luftdichten Wandabschnitt 7 gegenüber liegende und an der Unterseite der Schutztasche 1 angeordnete zweite luftdichte Wandabschnitt 11 ist hier erstmals bezeichnet. Die zum Innenraum weisende Innenseite der Wandung 3 weist einen hitzebeständigen und luftdurchlässigen Isolierstoff in Form eines Vliesstoffes auf. Der Isolierstoff ist jeweils eine in Lage der Wandabschnitte 7, 8, 10 und 11 sowie des den Boden ausbildenden Wandabschnittes der Wandung 3. Die luftdichten Wandabschnitte 7 und 11 sind einteilig mit dem den Boden ausbildenden Wandabschnitt von einem zugeschnittenen Teil des außenseitig mit Aluminium beschichteten, also aluminisierten, und innenseitig mit dem Isolierstoff versehenen Hitzeschutzgewebes ausgebildet und an ihren seitlichen Rändern mit den separat voneinander zugeschnittenen luftdurchlässigen Wandabschnitten 8 und 10 vernäht. Die seitlichen Ränder der Wandabschnitte 7, 8, 10 und 11 sind dabei übereinanderliegend angeordnet, wobei Innenseiten der Wandabschnitte 7, 8, 10 und 11 aneinander anliegen und die Kanten der Wandabschnitte 7, 8, 10 und 11 nach außen weisen. Die seitlichen Kanten und die untere Kante des ersten luftdurchlässigen Wandabschnittes 8 liegen hierbei an seitlichen Kanten der luftdichten Wandabschnitte 7 und 11 sowie des den Boden ausbildenden Wandabschnittes an und sind durch einen angenähten ersten Schutzstreifen 12 geschützt. Entsprechend liegen die seitlichen Kanten und die untere Kante des zweiten luftdurchlässigen Wandabschnittes 10 an seitlichen Kanten der luftdichten Wandabschnitte 7 und 11 sowie des den Boden ausbildenden Wandabschnittes an und sind durch einen angenähten zweiten Schutzstreifen 13 geschützt. Die an der die Öffnung 4 bildenden Schmalseite der Wandung 3 einzeln freiliegenden Kanten der Wandabschnitte 7, 8, 10 und 11 sind mit einem dritten Schutzstreifen 14 am ersten luftdichten Wandabschnitt 7 und weiteren aus Gründen der Übersichtlichkeit nicht bezeichneten Schutzstreifen an den Wandabschnitten 8, 10 und 11 versehen. Alles Schutzstreifen 12, 13 und 14 sind mit der Wandung 3 vernäht. In Abweichung vom dargestellten Ausführungsbeispiel sind vorzugsweise zusätzlich Keder in die Nähte eingelegt, welche die Nähte auf der dem Innenraum zugewandten Seite der Wandung 3 zusätzlich schützen.

Der Verschluss 5 weist eine Schnalle 15 aus Metall auf. Ein Ende des Zugmittels 6 ist fest mit der Schnalle 15 verbunden. Unmittelbar angrenzend an die Schnalle 15 ist das Zugmittel 6 mittels mehrerer Nähte mit dem ersten luftdichten Wandabschnitt 7 der Wandung 3 vernäht.

Fig. 4 zeigt einen Ausschnitt der Schutztasche 1 mit der Schnalle 15. Die Schnalle 15 weist ein Basisteil 16 mit einem Durchlass auf, durch welches das freie Ende des Zugmittels 6 hindurch gesteckt werden kann und durch welches daran angrenzende Teile des Zugmittels 6 zum Schließen der Öffnung 4 hindurch gezogen werden können. Die Schnalle 15 weist ferner ein beweglich am Basisteil 16 gehaltenes Klemmteil 17 mit einem Klemmabschnitt 18 und einem Betätigungsabschnitt 19 auf. Das Klemmteil 17 ist zwischen dem Klemmabschnitt 18 und der Betätigungsabschnitt 19 schwenkbar am Basisteil 16 gelagert. Der Klemmabschnitt 18 weist eine gezackte Kante auf, welche formschlüssig in das Zugmittel 6 eindrücken kann. Der Klemmabschnitt 18 ermöglicht ein reibungsarmes Zuziehen der Öffnung 4 und sichert die verschlossene Öffnung 4, indem der Klemmabschnitt 18 bei einem etwaigen Zurückziehen des Zugmittels 6 selbsttätig verstärkt mit der gezackten Kante in das Zugmittel 6 drückt. Durch manuelles Drücken auf den Betätigungsabschnitt 19 wird der Klemmabschnitt 18 hingegen gegenüber dem Zugmittel 6 angehoben, so dass die Öffnung 4 geweitet werden kann.

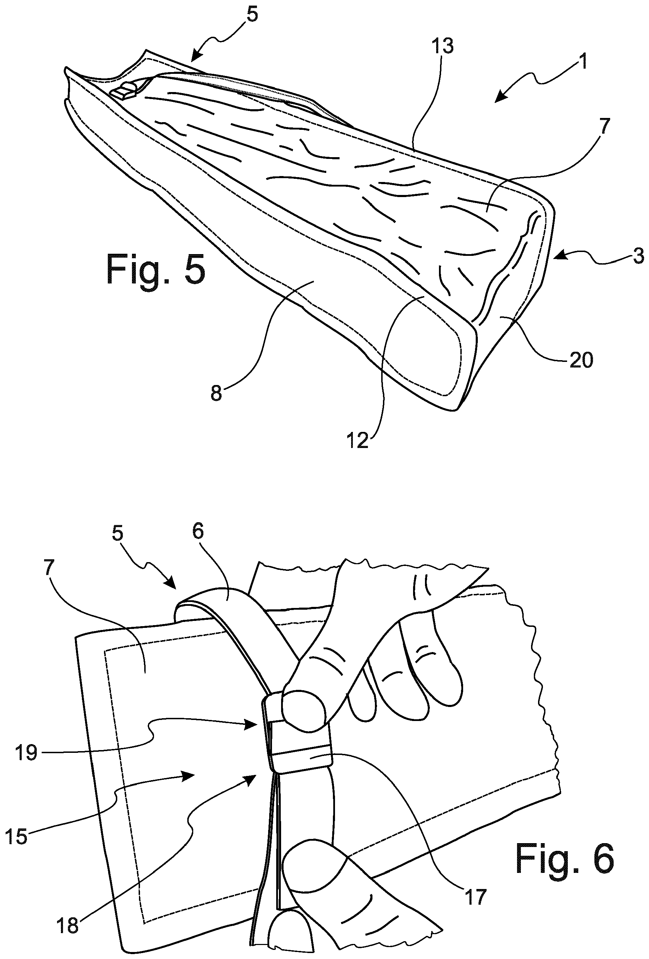

Fig. 5 zeigt die Schutztasche 1 aus einer weiteren Perspektive, welche den Blick auf den Boden der Schutztasche 1 freigibt. Der Boden der Schutztasche 1 ist von einem dritten luftdichten Wandabschnitt 20 ausgebildet und dabei von dem Teil der Wandung 3 ausgebildet, welcher auch die luftdichten Wandabschnitte 7 und 11 ausgebildet.

Fig. 6 zeigt einen Ausschnitt der Schutztasche 1 ähnlich dem Ausschnitt von Fig. 4. Das Zugmittel 6 ist durch die Schnalle 15 hindurchgeführt. Die Öffnung 4 kann durch Ziehen an dem in Fig. 6 unten dargestellten freien Ende des Zugmittels 6 zugezogen und verschlossen werden. Durch Drücken auf den Betätigungsabschnitt 19, wie in Fig. 6 dargestellt, kann sich das Zugmittel 6 hingegen durch den Durchlass in der Schnalle 15 zurückziehen und die Öffnung 4 freigegeben. Dadurch wird ein schnelles Öffnen und Schließen der Öffnung 4 möglich. Dies erhöht den Komfort im täglichen Gebrauch, also zum Lagern des Akkus 2 beim Ladevorgang. Außerdem kann ein bereits brennender Akku 2 in der Schutztasche 1 gesichert und die Öffnung 4 danach schnell durch alleiniges Ziehen am freien Ende des Zugmittels 6 verschlossen und durch Verrasten des Betätigungsabschnittes 19 am Zugmittel 6 gegen unbeabsichtigtes Öffnen der Öffnung 4 gesichert werden. Damit erhöht die Erfindung den Komfort und die Sicherheit im Umgang mit Akkus 2.

Figur 7 zeigt einen gasdurchlässigen Stopfen 21 für die Schutztasche 1. Der Stopfen 21 weist einen Verschlusskörper 22 und eine daran befestigte Lasche 23 mit einem Druckknopf 24 zur Befestigung des Stopfens 21 an der Wandung 3 der Schutztasche, insbesondere außerhalb der Öffnung 4, auf. Der Verschlusskörper 22 ist kegelstumpfartig ausgebildet und weist hierfür innenliegend zwei unterschiedlich große Knäuel aus Metalldrahtgeflecht auf. Ferner weist der Verschlusskörper 22 eine Hülle aus Glasgittergewebe auf. Innenliegend der Hülle an den axialen Enden des Stopfens 21 ist tellerartig geformtes Glasvlies angeordnet. Der Stopfen 21 kann somit in und vor der verschlossenen Öffnung 4 der Schutztasche 1 festklemmen und zuverlässig den Austritt von größeren Partikeln aus dem Innenraum der Schutztasche 1 verhindern.

### Bezugszahlenliste:

- 1: Schutztasche
- 2: Akku
- 3: Wandung
- 4: Öffnung
- 5: Verschluss
- 6: Zugmittel
- 7: erster luftdichter Wandabschnitt
- 8: erster luftdurchlässiger Wandabschnitt
- 9: Ladekabel
- 10: zweiter luftdurchlässiger Wandabschnitt
- 11: zweiter luftdichter Wandabschnitt
- 12: erster Schutzstreifen
- 13: zweiter Schutzstreifen
- 14: dritter Schutzstreifen
- 15: Schnalle
- 16: Basisteil
- 17: Klemmteil
- 18: Klemmabschnitt
- 19: Betätigungsabschnitt
- 20: dritter luftdichter Wandabschnitt
- 21: Stopfen
- 22: Verschlusskörper
- 23: Lasche
- 24: Druckknopf

## Patentansprüche

1. Schutztasche (1) für einen Akku (2), insbesondere zur sichereren Lagerung des Akkus (2) und zum Schutz vor Flammenaustritt bei einer Havarie des in der Schutztasche (1) positionierten Akkus (2), mit einer flexiblen, hitzebeständigen und feuerfesten Wandung (3), die aus mehreren miteinander verbundenen Wandabschnitten (7, 8, 10, 11, 20) besteht und einen Innenraum zur Aufnahme wenigstens eines Akkus (2) bereitstellt, und mit einer Öffnung (4), durch die hindurch der Akku (2) in den Innenraum eingelegt werden kann, und mit einem Verschluss (5) zum Verschließen der Öffnung (4),
**dadurch gekennzeichnet,**
**dass** die Wandabschnitte (7, 8, 10, 11, 20) wenigstens einen luftdurchlässigen Wandabschnitt (8, 10) aufweisen und
**dass**, insbesondere zum Laden des in der Schutztasche (1) befindlichen Akkus (2), dessen Ladekabel durch die Öffnung (4) geführt ist, der Verschluss (5) ein rings um die Öffnung (4) herum geführtes hitzebeständiges Zugmittel (6) zum Zusammenziehen der Öffnung (4) aufweist.

2. Schutztasche nach Anspruch 1, **dadurch gekennzeichnet, dass** die Wandung (3) eine luftdurchlässige Lage aus Metall aufweist, insbesondere in Form eines Metallgittergewebes oder eines Lochblechs.

3. Schutztasche nach Anspruch 2, **dadurch gekennzeichnet, dass** innenseitig der Lage aus Metall ein Isolierstoff, insbesondere ein hitzebeständiges Vlies, vorzugsweise Karbonvlies, angeordnet ist und außenseitig der Lage aus Metall wenigstens ein weiterer Isolierstoff, insbesondere ein weiteres hitzebeständiges Vlies, vorzugsweise Glasvlies, und weiter außenliegend noch ein hitzebeständiges Vlies, vorzugsweise vernadelter Kohlenstoff mit Glasgewebe, angeordnet ist.

4. Schutztasche nach einem der vorhergehenden Ansprüche, **dadurch gekennzeichnet, dass** die Wandung (3) an ihrer Außenseite ein abriebfestes und schnittfestes Hochtemperaturgewebe, insbesondere Para-Aramidgewebe oder Preox-Aramidgewebe, aufweist.

5. Schutztasche (1) nach einem der vorhergehenden Ansprüche, **dadurch gekennzeichnet, dass** die Schutztasche (1) einen im Bereich der Öffnung (4) mit der Wandung (3) fest oder mittels eines Verbindungsmittels, insbesondere Druckknopfes (24), reversibel verbundenen gasdurchlässigen Stopfen (21) aufweist, dessen Durchmesser in wenigstens einem bei eingelegtem Akku (2) im Innenraum zwischen dem Verschluss und dem Akku (2) angeordneten Abschnitt größer als der Öffnungsdurchmesser der zusammengezogenen Öffnung (4) ist.

6. Schutztasche (1) nach Anspruch 5, **dadurch gekennzeichnet, dass** der Stopfen (21) in etwa kegelstumpfartig ausgebildet ist, wobei in axialer Richtung ein erster Abschnitt des Stopfens (21) mit vergleichsweise größerem Durchmesser dem Akku (2) zugewandt ist und ein zweiter Abschnitt des Stopfens (21) mit vergleichsweise kleinerem Durchmesser der Öffnung (4) zugewandt ist.

7. Schutztasche (1) nach einem der Ansprüche 5 und 6, **dadurch gekennzeichnet, dass** der Stopfen (21) einen Kern aus Metalldraht, insbesondere Metalldrahtgeflecht oder Stahlwolle, aufweist, dass der Stopfen (21) eine Hülle aus Glasgittergewebe aufweist und dass zwischen dem Kern und der Hülle, insbesondere an den axialen Enden des Stopfens (21), zumindest abschnittsweise, insbesondere tellerartig, Glasvlies angeordnet ist.

8. Schutztasche (1) nach einem der vorhergehenden Ansprüche, **dadurch gekennzeichnet, dass** der Verschluss (5) eine feuerfeste Schnalle (15) mit wenigstens einem Durchlass aufweist, dass sich das Zugmittel (6) von einem an der Schnalle (15) festgelegten Ende des Zugmittels (6) um die Wandung (3) herum und durch den Durchlass hindurch bis zu einem freiliegenden Ende des Zugmittels (6) erstreckt.

9. Schutztasche (1) nach Anspruch 8, **dadurch gekennzeichnet, dass** der Verschluss (5) ein Schnellverschluss (5) ist, wobei die Öffnung (4) allein durch Zug am freien Ende des Zugmittels (6) zusammenziehbar ist und wobei die Schnalle (15) das Zugmittel (6) gegen ein selbsttätiges Zurückziehen des Zugmittels (6) durch den Durchlass sichert.

10. Schutztasche (1) nach einem der vorhergehenden Ansprüche, **dadurch gekennzeichnet, dass** der Verschluss (5) einen Überzug aus einem Hitzeschutzgewebe aufweist.

11. Schutztasche (1) nach einem der vorhergehenden Ansprüche, **dadurch gekennzeichnet, dass** die Wandabschnitte (7, 8, 10, 11, 20) wenigstens einen luftdichten Wandabschnitt (7, 11, 20) und den wenigstens einen luftdurchlässigen Wandabschnitt (8, 10) umfassen.

12. Schutztasche (1) nach Anspruch 11, **dadurch gekennzeichnet, dass** zwei luftdichte Wandabschnitte (7, 11) eine Oberseite und eine Unterseite der Wandung (3) ausbilden und dass zwei luftdurchlässige Wandabschnitte (8, 10) jeweils eine zwischen der Oberseite und der Unterseite angeordnete Längsseite der Wandung (3) ausbilden.

13. Schutztasche (1) nach einem der Ansprüche 11 und 12, **dadurch gekennzeichnet, dass** jeder luftdichte Wandabschnitt (7, 11, 20), insbesondere außenseitig, eine luftdichte Beschichtung insbesondere aus Aluminium aufweist.

14. Schutztasche (1) nach einem der vorhergehenden Ansprüche, **dadurch gekennzeichnet, dass** die Schutztasche (1) ein an der Innenseite der Wandung (3) angeordnetes Schutzgewebe, insbesondere ein Preox-Aramidgewebe, zum Schutz der Wandung (3) vor Abrieb durch den Akku (2) aufweist.

15. Schutztasche (1) nach einem der vorhergehenden Ansprüche, **dadurch gekennzeichnet, dass** die Wandabschnitte (7, 8, 10, 11, 20) miteinander vernäht sind und auf der Innenseite der Wandung (3) mit einem hitzebeständigen Keder als Nahtschutz verstärkt sind.
